# EUROPÄISCHE PATENTSCHRIFT

(11) **EP 1 527 993 B1**
(45) Veröffentlichungstag und Bekanntmachung des Hinweises auf die Patenterteilung: **11.02.2009**
(21) Anmeldenummer: 04025236.3
(22) Anmeldetag: 22.10.2004
(51) Int. Cl.: B64D 9/00, B65G 13/075

(54) **Fördereinrichtung für einen Laderaum eines Flugzeugs**
Conveyor system for an aircraft cargo hold
Convoyeur pour une soute d'avion

(30) Priorität: 03.11.2003 DE 10351200
(43) Veröffentlichungstag der Anmeldung: 04.05.2005
(73) Patentinhaber: Telair International GmbH, 83714 Miesbach (DE)
(72) Erfinder: Huber, Thomas, 83727 Schliersee (DE); Holzner, Richard, 83026 Rosenheim (DE)
(74) Vertreter: Bohnenberger, Johannes

(56) Entgegenhaltungen:
- GB-A- 2 043 584
- GB-A- 2 275 977
- US-A- 3 470 992
- US-A- 4 125 183
- US-A- 4 285 550
- US-A- 5 655 259
- US-A- 6 131 717
- US-B1- 6 354 424

## Beschreibung

Die Erfindung betrifft einen Laderaum eines Flugzeugs nach dem Oberbegriff des Patentanspruches 1.

In den Laderäumen verschiedener großer Flugzeugtypen werden Fördereinrichtungen verwendet, die zum Fördern längs der Flugzeugachse Rollenbahnen und an besonderen Stellen, insbesondere im Bereich der Tür des Laderaums oder in den Übergangsbereichen von drei auf zwei oder von zwei auf eine Rollenbahn (in sogenannten multi directional areas) eine Vielzahl von Kugelelementen umfassen, also richtungsunabhängige Förderelemente, auf denen in den Laderaum eingefahrene Container, Paletten oder dergleichen Frachtstücke in allen Richtungen verschoben und gedreht werden können.

Zur Verringerung der Unfallgefahr ist es weiterhin bekannt, im Bereich der Frachtraumladetür und zwar insbesondere an deren Kante Riegelelemente vorzusehen, die beim Hineinfahren der Ladung nach unten gedrückt werden und hinter dem Frachtstück wieder nach oben schnappen, so dass das Frachtstück nicht mehr aus der Ladetür versehentlich herausfahren bzw. -fallen kann. Insbesondere dann jedoch, wenn ein zu beladendes Flugzeug ungünstig steht oder aus anderen Gründen der Laderaumboden nicht horizontal liegt, kann es zu Problemen beim Beladen insbesondere schwerer Frachtstücke in den multi directional areas kommen.

Aus der US-A-6 354 424 ist eine gebremste Rolle bekannt, die in einer Rollenbahn montierbar ist und ein Abbremsen von Frachtgütern beim Einladen auf einer Rollenbahn ermöglichen soll.

Aus der DE-A-197 20 224 ist eine Fördereinrichtung nach dem Oberbegriff des Patentanspruches 1 bekannt, in welcher eine Vielzahl von Kugelelementen, wie sie beispielsweise aus der US-A-4 285 550 bekannt sind, oder eine Vielzahl von Schwenkrollen, wie sie beispielsweise aus der US-A-4 125 183 bekannt sind, montiert werden. Diese Matten werden insbesondere im Bereich einer Frachtraum-Ladetür montiert, so dass Frachtstücke in den Laderaum hinein gefahren und verschwenkt werden können. Bei diesen Anordnungen wird auf möglichst geringe Reibung der Förderelemente geachtet. Das oben genannte Problem besteht auch bei diesen Fördereinrichtungen.

Aus der US-A-4 347 794 ist eine Palette bekannt, die in einem Cargo-Terminal oder dergleichen Stationen Verwendung finden soll. Die Palette weist einen Boden mit Kugelelementen auf, um eine Last auf der Palette positionieren zu können. Um die Lasten auf der Palette bis an den Längsrand, aber möglichst nicht darüber hinaus erleichtert positionieren zu können, sind an den Längsrändern Schwenkrollen mit gebremsten Rollen vorgesehen, so dass ein Frachtstück im mittleren Bereich der Palette leicht verschoben werden kann, bis es an einen der Längsränder kommt und dort mit mindestens einer der gebremsten Lenkrollen in Kontakt kommt und so gebremst wird. An den vier Ecken der Palette sind weiterhin Pfosten vorgesehen, um eine definierte Endstellung der Frachtstücke auf der Palette zu sichern. Zu demselben Zweck sind an den Querrändern Anschlagleisten vorgesehen. Derartige Paletten könnten auch in Zusammenhang mit der vorliegenden Erfindung benutzt werden.

Der Erfindung liegt die Aufgabe zu Grunde, eine Fördereinrichtung für einen Laderaum eines Flugzeugs dahin gehend weiterzubilden, dass das Einladen von Frachtstücken erleichtert und verbessert wird.

Ein wesentlicher Punkt der Erfindung liegt also darin, dass in einem Bereich des Frachtraums, in welchem bisher auf möglichst leichtgängige Förderelemente geachtet wurde, nun (auch) Bremselemente vorgesehen sind, welche die Frachtstücke abbremsen. Dadurch sinkt insbesondere bei schweren Frachtstücken die Gefahr von unkontrollierten Bewegungen der Frachtstücke.

Die Bremselemente sind derart ausgebildet, dass die Bremskraft bei Bedarf abstellbar ist. Besonders dann, wenn eine absolut horizontale Ausrichtung der Förderebene gewährleistet ist, kann dies den Beladevorgang erleichtern.

Bei einer ersten Alternative sind die Bremselemente als Kugelelemente mit gebremsten Kugeln ausgebildet und unterscheiden sich somit nicht prinzipiell von den ohnehin vorgesehenen Kugelelementen. Bei einer anderen Ausführungsform der Erfindung sind die Bremselemente als Schwenkrollen (eine derartige Schwenkrolle ist unter der Bezeichnung "swivel caster 203100-series" für "Airbus" und "Boeing" vorbekannt) mit gebremsten Rollen ausgebildet, die sich beim Einfahren und Bewegen eines Frachtstücks in den Laderaum in der Bewegungsrichtung ausrichten. Derartige Schwenkrollen können mit relativ breiten Rollen ausgebildet sein, so dass große Kontaktflächen zu den Frachtstücken zum Abbremsen mit hohen Bremsmomenten zur Verfügung stehen. Hierbei sind die Schwenkrollen vorzugsweise mit einem Freilauf ausgestattet, wobei ein Abbremsen der Rollen nur in der Richtung erfolgt, in welche sich die Schwenkrollen bei Bewegen eines Frachtstücks auf ihnen ausrichten.

Die Bremselemente können derart ausgebildet werden, dass die Bremskraft abhängig von einer auf die Bremselemente senkrecht zur Förderebene wirkenden Belastungskraft veränderbar ist. Dies entspricht somit einer Einstellung der Bremskraft abhängig von der abzubremsenden Masse eines Frachtstücks insbesondere derart, dass leichte und gefahrlos im Türbereich zu befördernde Frachtstücke mit geringerer Bremskraft beaufschlagt werden also solche, die aufgrund höherer Masse Schäden am Flugzeug oder gar am Frachtpersonal bei unkontrollierten Bewegungen verursachen könnten.

Weiterhin ist es bevorzugt, wenn die Bremselemente derart ausgebildet sind, dass die Bremskraft abhängig von der Fördergeschwindigkeit veränderbar ist. Mit einer derartigen Ausbildung der Bremselemente kann gewährleistet werden, dass keine zu hohen Geschwindigkeiten der Frachtstücke auftreten, was wiederum einer Gefahrenminderung entspricht.

Bevorzugte Ausführungsformen ergeben sich aus den Unteransprüchen sowie aus der nachfolgenden Beschreibung bevorzugter Ausführungsformen, die anhand von Abbildungen näher erläutert werden. Hierbei zeigen
- Fig. 1: eine perspektivische Ansicht einer Kugelmatte, wie sie in einem Flugzeug-Ladraum Verwendung findet,
- Fig. 2: eine perspektivische Darstellung einer Schwenkrolle,
- Fig. 3: eine Seitenansicht der Schwenkrolle nach Fig. 2,
- Fig. 4: einen Schnitt entlang der Linie IV-IV aus Fig. 3 und
- Fig. 5: eine Schnittdarstellung eines gebremsten Kugelelementes.

In der nachfolgenden Beschreibung werden für gleiche und gleich wirkende Teile dieselben Bezugsziffern verwendet.

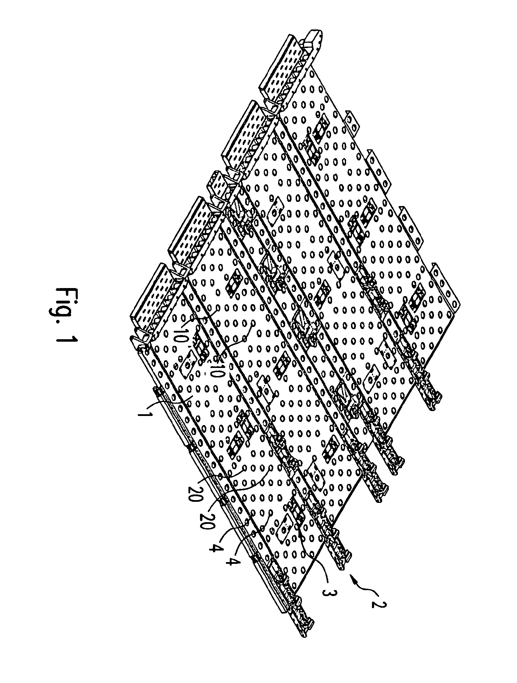

Wie in Fig. 1 gezeigt umfasst eine Fördereinrichtung für einen Laderaum eines Flugzeugs eine Matte 1, in der eine Vielzahl von Kugelelementen 4 und PDUs (Rollenantriebseinheiten) installiert sind. Anschließend an die Matte 1 sind Rollenförderbahnen 2 vorgesehen, auf welchen Frachtstücke in Richtung der Rollenförderbahnen 2 beförderbar sind, während diese Frachtstücke in den Bereichen der Kugelelemente 4 in allen Richtungen verschoben und gedreht werden können.

In der Matte 1 sind neben den Kugelelementen 4 auch gebremste Kugelelemente 10 und/oder gebremste Schwenkrollen 20, wobei deren Positionierung in Fig. 1 nur schematisiert angedeutet ist. Im Allgemeinen ist die hier vorgeschlagene Bremsfunktion auch dann gewährleistet, wenn in systematisch verteilten größeren Abständen gebremste Kugelelemente 10 oder gebremste Schwenkrollen 20 in der Matte 1 sitzen.

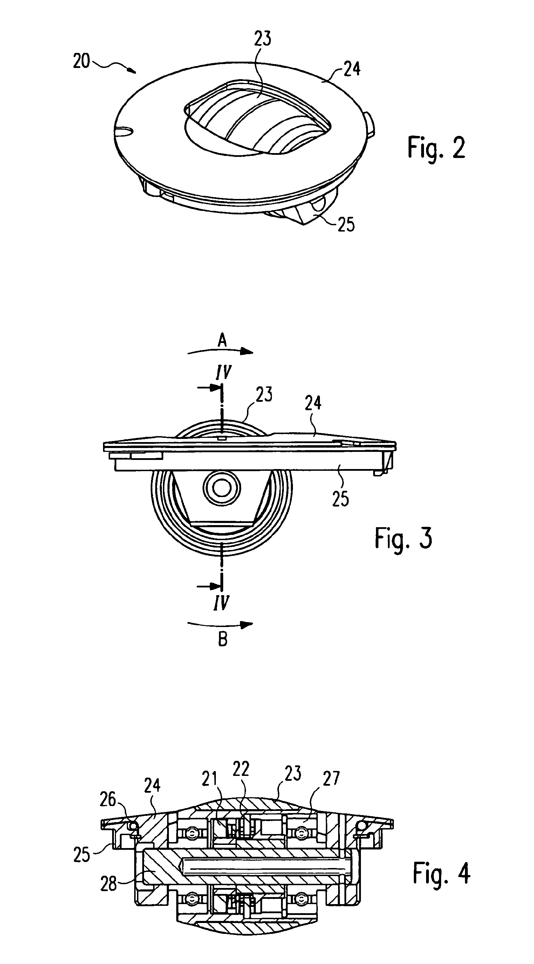

Eine Ausführungsform einer gebremsten Schwenkrolle 20 wird nachfolgend anhand der Figuren 2, 3 und 4 näher erläutert.

Aus den Figuren 2 und 3 geht hervor, dass eine gebremste Schwenkrolle 20 einen Schwenkteller 24 aufweist, der über Schwenklager 26 (siehe Fig. 4) in einem Sockel 25 um eine vertikale, also senkrecht zur Förderebene stehende Achse verdrehbar ist. Im Schwenkteller 24 ist eine Rolle 23 über Rollenlager 27 auf einer Welle 28 gelagert, wobei die Welle 28 versetzt zur vertikalen Drehachse der Schwenkrolle 20 derart angeordnet ist, dass beim Überfahren der Schwenkrolle 20 der Schwenkteller 24 aufgrund des Nachlaufes zwischen dem Kontaktpunkt der Rolle 23 und dem Frachtstück und der durch das Schwenklager 26 definierten vertikalen Drehachse der Schwenkteller 24 so verdreht wird, dass die Welle 28 (und damit die Drehachse der Rolle 23) senkrecht zur Förderrichtung des darüber laufenden Frachtstücks verläuft.

Funktionell zwischen der im Sockel 25 festsitzenden Welle 28 und der Rolle 23 ist eine Bremse 22 über einen Freilauf 21 angeschlossen. Der Freilauf weist eine Freilaufrichtung in Richtung des Pfeiles A (Fig. 3) auf, so dass die Bremse 22 nur dann wirksam wird, wenn die Rolle 23 entgegengesetzt, also in Richtung des Pfeiles B in Fig. 3 (also in der Nachlaufrichtung) dreht. Ein Frachtstück wird also durch die in den Figuren 2 - 4 gezeigte Schwenkrolle gebremst, sobald sich diese in ihrer Nachlaufrichtung eingestellt hat.

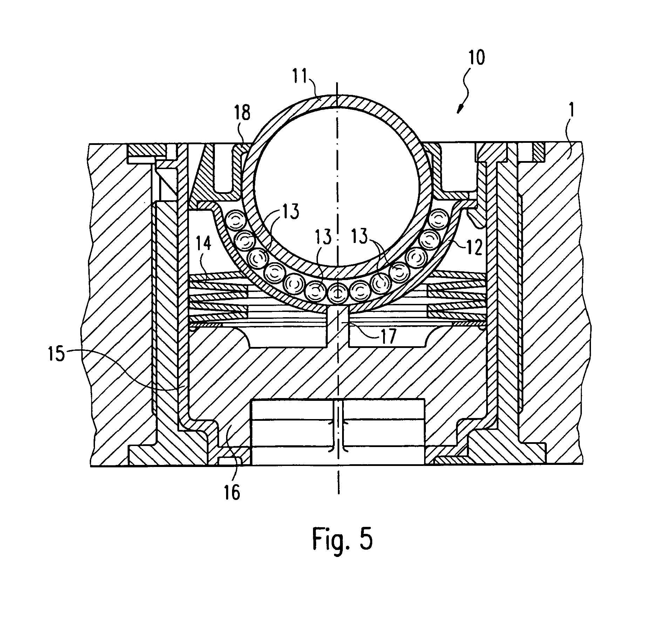

Bei dem in Fig. 5 gezeigten Bremselement handelt es sich um ein Kugelelement 10, wie dies in seinem prinzipiellen Aufbau aus der DE 38 05 494 an sich bekannt ist. Bei diesem Kugelelement 10 läuft eine Kugel 11 auf Lagerkugeln 13, die in einer Lagerschale 12 liegen. Die Lagerschale 12 sitzt auf einem Federpaket 14, welches auf einem Einsatz 16 in einem Gehäuse 15 des Kugelelements 10 abgestützt ist. Die Kugel 11 wird über einen Haltering 13 im Gehäuse 15 gehalten, das wiederum in der Matte 1 montiert ist.

Vom Einsatz 16 ragt ein Bremsfinger 17 durch die Lagerschale so in den Bereich der Lagerkugeln 13, dass bei einer Belastung der Kugel 11 von oben die Lagerschale 12 entgegen der Kraft des Federpakets 14 nach unten gedrückt und durch den Bremsfinger 17 die Bewegung der Lagerkugeln 13 in der Lagerschale 12 abgebremst wird, wodurch wiederum die Kugel 11 in ihrer Bewegung gebremst wird. Es sei an dieser Stelle betont, dass dies nur eine von verschiedenen Möglichkeiten darstellt, um die Kugel 11 abhängig von der Belastung durch ein Frachtstück mehr oder minder stark abzubremsen.

Selbstverständlich ist es auch möglich, die Bremseinrichtung nicht als Förderelement (gemäß den Figuren 2 - 5) aufzubauen, sondern vielmehr eine gesonderte Bremse z.B. in Form eines elastischen Bremskissens vorzusehen, das dann wiederum ebenfalls lastabhängig eine größere oder geringere Bremskraft ausüben kann. Weiterhin ist es möglich, die in den Figuren 2 - 5 gezeigten abgebremsten Förderelemente derart auszugestalten, dass die Bremskraft abhängig ist von der Fördergeschwindigkeit, also der Drehzahl, mit der sich die Rolle 23 bzw. die Kugel 11 dreht.

### Bezugszeichenliste

- 1: Matte
- 2: Rollenförderband
- 3: PDU
- 4: Kugelelement
- 10: Kugelelement gebremst
- 11: Kugel
- 12: Lagerschale
- 13: Lagerkugel
- 14: Federpaket
- 15: Gehäuse
- 16: Einsatz
- 17: Bremsfinger
- 18: Haltering
- 20: Schwenkrolle gebremst
- 21: Freilauf
- 22: Bremse
- 23: Rolle
- 24: Schwenkteller
- 25: Sockel
- 26: Schwenklager
- 27: Rollenlager
- 28: Welle

## Patentansprüche

1. Laderaum eines Flugzeugs mit Fördereinrichtungen, umfassend
Rollenbahnen zum Fördern von Containern oder dergleichen Frachtstücken längs einer Flugzeuglängsachse und
mindestens eine Matte (1) mit einer Vielzahl von Kugelelementen (4) oder dergleichen richtungsunabhängigen, leichtgängigen Förderelementen, auf denen der Container oder dergleichen Frachtstück linear oder unter Richtungswechsel in einer Förderebene verschiebbar ist,
**dadurch gekennzeichnet, dass**
in einem Türbereich des Laderaums zusätzlich zu den leichtgängigen Förderelementen weitere, als Bremselemente ausgebildete Förderelemente vorgesehen sind, die als Schwenkrollen (20) mit gebremsten Rollen (23) oder als Kugelelemente (10) mit gebremsten Kugeln (11) ausgebildet sind, und dass die weiteren Förderelemente zur Aufbringung einer vorbestimmten, endlichen Bremskraft auf das Frachtstück ausgebildet und in Abständen neben den leichtgängigen Förderelementen vorgesehen sind, wobei die Bremselemente (10, 20) Einrichtungen zum Abstellen der Bremskraft aufweisen.

2. Laderaum nach Anspruch 1,
**dadurch gekennzeichnet, dass**
die Schwenkrollen (21) einen Freilauf derart aufweisen, dass ein Abbremsen der Rollen (23) nur in einer Nachlaufrichtung erfolgt.

3. Laderaum nach einem der vorhergehenden Ansprüche,
**dadurch gekennzeichnet, dass**
die Bremselemente (10) derart ausgebildet sind, dass die Bremskraft abhängig von einer auf die Bremselemente (10) senkrecht zur Förderebene wirkenden Belastungskraft veränderbar ist.

4. Laderaum nach einem der vorhergehenden Ansprüche,
**dadurch gekennzeichnet, dass**
die Bremselemente (10, 20) derart ausgebildet sind, dass die Bremskraft abhängig von einer Fördergeschwindigkeit veränderbar ist.

## Claims

1. Cargo hold of an aircraft with conveyor apparatus comprising
roller conveyors for transporting containers or similar items of freight along an aircraft's longitudinal axis and
at least one mat (1) with a plurality of ball elements (4) or similar direction-independent, smooth-running conveyor elements, on which the container or similar item of freight can be displaced linearly or, with a change in direction, on a plane of conveyance,
**characterised in that**
other conveyor elements configured as braking elements are provided in a door area of the cargo hold, which elements are configured as swivel castors (20) with braked rollers (23) or as ball elements (10) with braked balls (11), and **in that** the other conveyor elements are configured to accommodate a predetermined, finite braking force on the item of freight and are provided at intervals next to the smooth-running conveyor elements, wherein the braking elements (10, 20) have mechanisms for suppressing the braking force.

2. Cargo hold according to Claim 1,
**characterised in that**
the swivel castors (21) exhibit free-wheeling in such a way that braking of the rollers (23) only occurs in the direction of a castor.

3. Cargo hold according to one of the previous claims,
**characterised in that**
the braking elements (10) are configured in such a way that the braking force may be altered independently of a loading force acting on the braking elements (10) horizontally to the plane of conveyance.

4. Cargo hold according to one of the previous claims,
**characterised in that**
the braking elements (10, 20) are configured in such a way that the braking force may be altered independently of a speed of conveyance.

## Revendications

1. Soute d'un avion avec des dispositifs de transport, comprenant des transporteurs à rouleaux pour le transport de conteneurs ou colis similaires le long d'un axe longitudinal de l'avion et
au moins un tapis (1) avec une pluralité d'éléments sphériques (4) ou éléments de transport similaires tournant facilement, non directionnels, sur lesquels le conteneur ou colis similaire peut être déplacé linéairement ou avec un changement de direction dans un plan de transport,
**caractérisée en ce que** dans une zone de porte de la soute, outre les éléments de transport tournant facilement, sont prévus d'autres éléments de transport réalisés comme des éléments de freinage, qui sont réalisés comme des roulettes pivotantes (20) avec des roulettes (23) freinées ou comme des éléments sphériques (10) avec des billes (11) freinées, et **en ce que** les autres éléments de transport sont réalisés pour l'application d'une force de freinage finie, prédéterminée sur le colis et sont prévus à intervalles à côté des éléments de transport tournant facilement, les éléments de freinage (10, 20) présentant des dispositifs pour interrompre la force de freinage.

2. Soute selon la revendication 1,
**caractérisée en ce que**
les roulettes (21) présentent une roue libre de telle sorte qu'un freinage des roulettes (23) ne soit effectué que dans un sens de marche arrière.

3. Soute selon l'une des revendications précédentes,
**caractérisée en ce que**
les éléments de freinage (10) sont réalisés de sorte que la force de freinage puisse être modifiée en fonction d'une charge agissant sur les éléments de freinage (10) perpendiculairement au plan de transport.

4. Soute selon l'une des revendications précédentes,
**caractérisée en ce que**
les éléments de freinage (10, 20) sont réalisés de sorte que la force de freinage puisse être modifiée en fonction d'une vitesse de transport.
